# EUROPÄISCHE PATENTSCHRIFT

(11) **EP 3 463 005 B1**
(45) Veröffentlichungstag und Bekanntmachung des Hinweises auf die Patenterteilung: **05.08.2020**
(21) Anmeldenummer: 17729824.7
(22) Anmeldetag: 01.06.2017
(51) Int. Cl.: A47J 31/36

(54) **KAPSELSYSTEM ZUR HERSTELLUNG EINES GETRÄNKS**
CAPSULE SYSTEM FOR PRODUCING A BEVERAGE
SYSTÈME DE CAPSULE POUR PRÉPARER UNE BOISSON

(30) Priorität: 07.06.2016 DE 102016210033
(43) Veröffentlichungstag der Anmeldung: 10.04.2019
(73) Patentinhaber: BSH Hausgeräte GmbH, 81739 München (DE)
(72) Erfinder: JANTSCHKE, Alexander, 85540 Haar (DE); KLEINLEIN, Philipp, 81371 München (DE); REHFUSS, Evgeni, 81673 München (DE); SOMMER, Leo, 80634 München (DE)
(86) Internationale Anmeldenummer: PCT/EP2017/063313
(87) Internationale Veröffentlichungsnummer: WO 2017/211680

(56) Entgegenhaltungen:
- EP-A1- 1 002 490
- WO-A1-2006/126230

## Beschreibung

Die Erfindung betrifft ein System zur Herstellung eines individuell portionierten Getränks auf Basis einer Kapsel mit Inhaltsstoffen für ein solches Getränk.

In professionellen Anwendungen und in Konsumentenanwendungen werden verschiedenste kapselbasierte Getränkesysteme verwendet. Auf Basis des Inhalts von Kapseln können heiße Getränke wie Kaffee oder Tee und kalte Getränke wie Limonaden etc. hergestellt werden. Eine Kapsel enthält dazu meist Inhaltsstoffe (z.B. ein Sirup, ein Pulver, etc.), die in einer separat zuzugebenden Flüssigkeit (insbesondere in Wasser) aufzulösen sind, um das jeweils ausgewählte Getränk herzustellen. Die kapselbasierten Getränkesysteme (in diesem Dokument als Kapselsysteme bezeichnet) bereiten mit Hilfe der Inhaltsstoffe einer Kapsel das jeweilige Getränk portionsweise und nach Bedarf zu.

Für die Herstellung eines Getränks legt ein Nutzer typischerweise eine Kapsel in das Kapselsystem ein und veranlasst daraufhin, dass die Inhaltsstoffe der Kapsel mit Flüssigkeit vermischt werden, um das Getränk herzustellen. Dabei kann eine Kapsel ggf. falsch eingelegt bzw. verklemmt werden, was zu Problemen bei der Herstellung eines Getränks führen kann. Unterschiedliche Aspekte von Systemen zur Herstellung eines Getränks sind in WO 2012 / 123 440 A1, DE 600 21 531 T1, US 9 155 418 B2, DE 601 26 287 T2, EP 0 199 953 B1, DE 603 09 723 T2, US 2008 / 0 203 870 A1, DE 10 2008 014 233 B4, DE 10 2007 041 093 A1 beschrieben. Des Weiteren beschreibt WO 2006/126230 ein Getränkesystem mit einer Schublade. Ferner beschreibt EP 1 002 490 ein Getränkesystem zur Verarbeitung von Kapseln.

Das vorliegende Dokument befasst sich mit der technischen Aufgabe, ein Kapselsystem zur Herstellung eines Getränks bereitzustellen, das ein zuverlässiges Einführen und Verarbeiten einer Kapsel und somit die zuverlässige Herstellung eines Getränks ermöglicht.

Die Aufgabe wird durch den Gegenstand des unabhängigen Patentanspruchs gelöst. Vorteilhafte Ausführungsformen sind insbesondere in den abhängigen Patentansprüchen definiert, in nachfolgender Beschreibung beschrieben oder in den Figuren der beigefügten Zeichnung dargestellt.

Gemäß einem Aspekt der Erfindung wird ein Kapselsystem zur Herstellung eines Getränks beschrieben. Dabei kann von dem Kapselsystem insbesondere eine Kapsel verarbeitet werden, die Inhaltsstoffe für eine Portion (z.B. für ein Glas) eines (alkoholischen oder nicht-alkoholischen) Getränks umfasst. Aus den (insbesondere aus substantiell allen) Inhaltsstoffen einer Kapsel kann durch das Kapselsystem eine Portion eines Getränks hergestellt werden.

Das Kapselsystem umfasst ein Gehäuse, das zumindest teilweise einen Innenbereich des Kapselsystems umschließt. Beispielsweise kann das Gehäuse quaderförmig sein, mit vier Seitenwänden, einem Boden und einer Deckenwand. Das Kapselsystem kann beispielsweise als ein Hausgerät, insbesondere als ein Haushaltsgerät, ausgebildet sein, das z.B. auf eine Arbeitsplatte einer Küche gestellt und/oder in einen Einbauschrank eingebaut werden kann.

Außerdem umfasst das Kapselsystem eine Aufnahmeeinheit, die eingerichtet ist, eine Kapsel zur Herstellung eines Getränks aufzunehmen. Insbesondere kann es die Aufnahmeeinheit einem Nutzer ermöglichen, eine Kapsel an das Kapselsystem zu übergeben. An der Aufnahmeeinheit wird dann die Kapsel von dem Kapselsystem aufgenommen, und wird daraufhin typischerweise nicht mehr von einem Nutzer berührt. Ggf. kann die Aufnahmeeinheit Mittel umfassen (z.B. eine Aussparung für einen Finger), die es einem Nutzer ermöglichen, eine bereits an das Kapselsystem übergebene Kapsel wieder zu entfernen (z.B. wenn erkannt wurde, dass eine Kapsel für einen falschen Typ von Getränk eingelegt wurde).

Das Kapselsystem umfasst weiter Beförderungsmittel, die eingerichtet sind, eine von der Aufnahmeeinheit aufgenommene Kapsel mittels ein oder mehrerer Aktuatoren an eine Verarbeitungsposition im Innenbereich des Kapselsystems zu befördern. Die ein oder mehreren Aktuatoren können z.B. elektrisch betrieben werden. Insbesondere können die ein oder mehreren Aktuatoren ein oder mehrere Elektromotoren umfassen. Durch die Verwendung von automatischen Beförderungsmitteln kann eine zuverlässige und präzise Anordnung einer Kapsel an einer bestimmten Verarbeitungsposition im Innenbereich des Kapselsystems gewährleistet werden.

Die Kapsel kann an der Verarbeitungsposition geöffnet werden, um aus Inhaltsstoffen der Kapsel ein Getränk herzustellen. Insbesondere kann das Kapselsystem zu diesem Zweck Verarbeitungsmittel umfassen, die eingerichtet sind, eine an der Verarbeitungsposition angeordnete Kapsel zu öffnen, um aus den Inhaltsstoffen der Kapsel ein Getränk herzustellen. Die Verarbeitungsmittel können z.B. ein oder mehrere (Hohl-)Nadeln umfassen, mit denen der Deckel einer Kapsel geöffnet werden kann, um einen Zugang zu den Inhaltsstoffen der Kapsel zu generieren. Die geöffnete Kapsel kann dann ggf. durch eine Flüssigkeit durchspült werden, um ein Getränk aus den Inhaltsstoffen zu erzeugen. Des Weiteren kann das Kapselsystem eine Ausgabeeinheit zur Bereitstellung eines aus einer Kapsel hergestellten Getränks umfassen.

Das Kapselsystem umfasst außerdem eine Steuereinheit, die eingerichtet ist, den Herstellungsprozess eines Getränks zu steuern. Insbesondere ist die Steuereinheit eingerichtet, die Beförderungsmittel zu veranlassen, eine von der Aufnahmeeinheit aufgenommene erste Kapsel an die Verarbeitungsposition zu befördern. Des Weiteren kann die Steuereinheit eingerichtet sein, zu veranlassen, dass aus den Inhaltsstoffen der ersten Kapsel ein erstes Getränk herstellt wird. Insbesondere kann die Steuereinheit eingerichtet sein, die Verarbeitungsmittel zu veranlassen, aus Inhaltsstoffen der ersten Kapsel ein erstes Getränk herzustellen und über die Ausgabeeinheit bereitzustellen. Dabei kann die Herstellung des ersten Getränks automatisch (d.h. ohne weiteres Einwirken eines Nutzers) durchgeführt werden, sobald sich die erste Kapsel an der Verarbeitungsposition im Innenbereich des Kapselsystems befindet.

Das Kapselsystem ermöglicht eine komfortable und zuverlässige Herstellung eines Getränks auf Basis der Inhaltsstoffe einer Kapsel. Dabei wird insbesondere durch die Verwendung von angetriebenen Beförderungsmitteln erreicht, dass eine Kapsel zuverlässig und präzise an eine bestimmte Verarbeitungsposition im Kapselsystem befördert wird, so dass Probleme im Herstellungsprozess (wie z.B. eine falsche Platzierung einer Kapsel) vermieden werden können. Die Verwendung von angetriebenen Beförderungsmitteln ist insbesondere bei der Verwendung von Mehrkammer-Kapseln (mit mehreren Kammern für unterschiedliche Substanzen zur Herstellung eines Getränks) vorteilhaft, da das Öffnen und Spülen von derartigen Mehrkammer-Kapseln typischerweise eine besonders präzise Positionierung der Kapsel an einer bestimmten Verarbeitungsposition erfordert.

Das Kapselsystem kann somit eingerichtet sein, ein Getränk auf Basis einer Mehrkammer-Kapsel herzustellen, die mehrere Kammern mit unterschiedlichen Substanzen zur Herstellung eines Getränks umfasst, wodurch die zuverlässige Herstellung von komplexen Getränken ermöglicht wird.

Die Mehrkammer-Kapsel kann eine äußere Schale umfassen, die einen äußeren Boden, eine äußere Seitenwand und einen äußeren Deckel aufweist, die einen Gesamthohlraum der Mehrkammer-Kapsel bilden. Außerdem kann die Mehrkammer-Kapsel mindestens eine innere Schale umfassen, die innerhalb des Gesamthohlraums der Kapsel angeordnet ist und die eine zweite Kammer zur Aufnahme eines zweiten Volumens eines zweiten Inhaltsstoffes bildet. Dabei wird durch den Gesamthohlraum abzüglich der mindestens einen inneren Schale ein verbleibender Hohlraum der Mehrkammer-Kapsel als erste Kammer zur Aufnahme eines ersten Volumens eines ersten Inhaltsstoffes gebildet. Die Verarbeitungsmittel können eingerichtet sein, um die innere Schale der Kapsel zu öffnen und um innerhalb der Kapsel einen Hohlraum zur Aufnahme einer Mischung zu schaffen, die den ersten Inhaltsstoff und den zweiten Inhaltsstoff vollständig umfasst. Durch die Herstellung einer Inhaltsstoff-Mischung innerhalb einer Mehrkammer-Kapsel können in zuverlässiger Weise komplexe Getränke hergestellt werden.

Die Verarbeitungsmittel können eingerichtet sein, die Kapsel zu kippen, um die Inhaltsstoffe, insbesondere um die Inhaltsstoff-Mischung durch eine Öffnung im äußeren Deckel aus der Kapsel zu gießen. So wird eine effiziente Herstellung eines Getränks ermöglicht.

Die Aufnahmeeinheit kann eine Form aufweisen, die an eine Form der Kapsel angepasst ist, so dass eine Kapsel in zuverlässiger Weise übergeben werden kann. Insbesondere kann eine Aussparung der Aufnahmeeinheit zur Aufnahme einer Kapsel eine Kontur aufweisen, die einer Kontur bzw. einem Umriss der Kapsel entspricht. Dabei kann eine Kapsel z.B. zylinderförmig sein mit unterschiedlich großen Boden- und Deckelflächen. Die Aufnahmeeinheit kann eine Öffnung bzw. Aussparung umfassen, die an die unterschiedlich großen Boden- und Deckelflächen der Kapsel angepasst ist. So kann bewirkt werden, dass ein Nutzer eine Kapsel in intuitiver Weise mit einer korrekten Orientierung an das Kapselsystem übergibt.

Die Aufnahmeeinheit kann z.B. an einer Frontwand des Gehäuses angeordnet sein. Eine Anordnung an der Frontwand ermöglicht es einem Nutzer eine Kapsel in einer relativ niedrigen Höhe an das Kapselsystem übergeben zu können. Beispielsweise kann das Kapselsystem als ein Hausgerät auf einer Arbeitsplatte einer Küche angeordnet sein, so dass eine an der Frontwand des Kapselsystems angeordnete Aufnahmeeinheit eine komfortable, ergonomisch optimale Kapselübergabe ermöglicht.

Alternativ oder ergänzend kann die Aufnahmeeinheit derart ausgebildet sein, dass eine Kapsel mit einem nach Oben orientierten Deckel in die Aufnahmeeinheit eingebracht werden kann. Der Deckel der Kapsel kann dabei eine größere Fläche aufweisen als der Boden der Kapsel und die Aufnahmeeinheit kann eine entsprechende Form aufweisen. Durch den Deckel der Kapsel wird typischerweise angezeigt, welcher Typ von Getränk mit der Kapsel hergestellt werden kann (z.B. durch eine bestimmte Farbe und/oder durch einen aufgedruckten Schriftzug). Durch das Übergeben einer Kapsel mit nach Oben orientiertem Deckel kann somit das Einlegen von falschen Kapseln vermieden werden.

Alternativ oder ergänzend kann die Aufnahmeeinheit derart ausgebildet sein, dass die Kapsel (ggf. auch) in umgekehrter Position, also mit der Kapseloberseite nach unten orientiert in die Aufnahmeeinheit (insbesondere in eine Kapselaufnahme) eingelegt werden kann. Alternativ oder ergänzend kann die Aufnahmeeinheit derart ausgebildet sein, dass die Kapsel (ggf. auch) in waagrechter Position (90° gedreht) in die Aufnahmeeinheit (insbesondere in eine Kapselaufnahme) eingelegt werden kann, mit der Oberseite dem System bzw. dem Gehäuse zugewendet. Alternativ oder ergänzend kann die Aufnahmeeinheit derart ausgebildet sein, dass die Kapsel (ggf. auch) in waagrechter (90° gedreht) Position in die Aufnahmeeinheit (insbesondere in eine Kapselaufnahme) eingelegt werden kann, mit der Oberseite dem Nutzer zugewendet bzw. vom System / Gehäuse weggewendet.

Die Beförderungsmittel umfassen bevorzugt einen Beförderungsschlitten, der durch die ein oder mehreren Aktuatoren von einem ausgefahrenen Zustand in einen eingefahrenen Zustand überführt werden kann. Insbesondere kann sich der Beförderungsschlitten für die Aufnahme einer Kapsel im ausgefahrenen Zustand befinden, um einem Nutzer eine komfortable Übergabe der Kapsel zu ermöglichen. Dabei kann die Aufnahmeeinheit an dem Beförderungsschlitten angeordnet sein, so dass sich die Aufnahmeeinheit im ausgefahrenen Zustand außerhalb des Gehäuses des Kapselsystems befindet, und somit eine komfortable Übergabe der Kapsel ermöglicht. Andererseits kann sich die Aufnahmeeinheit im eingefahrenen Zustand an der Verarbeitungsposition befinden, um aus den Inhaltsstoffen einer Kapsel ein Getränk herzustellen. Beispielsweise kann der Beförderungsschlitten eine Aussparung aufweisen, in die eine Kapsel eingelegt werden kann (wenn sich der Beförderungsschlitten im ausgefahrenen Zustand befindet). Die Aussparung kann zu diesem Zweck eine einer Kapsel entsprechende Form aufweisen. Die Aufnahmeeinheit kann somit eine Aussparung im Beförderungsschlitten umfassen bzw. einer solchen Aussparung entsprechen. Die Steuereinheit kann eingerichtet sein, den Beförderungsschlitten zu veranlassen, in den ausgefahrenen Zustand zu fahren, um es einem Nutzer zu ermöglichen die erste Kapsel an die Aufnahmeeinheit zu übergeben. Das Ausfahren des Beförderungsschlittens kann in Reaktion auf eine Eingabe eines Nutzers über eine Benutzerschnittstelle des Kapselsystems erfolgen. Des Weiteren kann die Steuereinheit eingerichtet sein, den Beförderungsschlitten zu veranlassen, in den eingefahrenen Zustand zu fahren, um die erste Kapsel an die Verarbeitungsposition zu befördern. Die Verwendung eines Beförderungsmittels ermöglicht eine besonders komfortable und zuverlässige Überführung einer Kapsel von einem Außenbereich des Kapselsystems an die Verarbeitungsposition im Innenbereich des Kapselsystems.

Der Beförderungsschlitten kann einen Leuchtbereich aufweisen, der eine Mehrzahl von Leuchtzuständen aufweist. Die Leuchtzustände können sich z.B. in Bezug auf Farbe, Lichtintensität und/oder zeitliche Veränderungen von Farbe und/oder Intensität unterscheiden. Die Steuereinheit kann eingerichtet sein, den Leuchtbereich anzusteuern, um mittels der Mehrzahl von Leuchtzuständen, Information in Bezug auf die Herstellung des ersten Getränks auszugeben. Dabei kann die Information in Bezug auf die Herstellung des ersten Getränks insbesondere umfassen: einen Prozessstatus bei der Herstellung des ersten Getränks und/oder einen Typ des hergestellten ersten Getränks. Durch die Bereitstellung eines derartigen Leuchtbereichs kann die Interaktion des Kapselsystems mit einem Nutzer verbessert werden.

Alternativ oder ergänzend kann der Beförderungsschlitten einen austauschbaren Front-Bereich aufweisen. Dabei kann der Front-Bereich ausgelegt sein, um eine Nutzereingabe zu ermöglichen (z.B. durch Bereitstellung einer Eingabetaste). Insbesondere kann der Front-Bereich ausgelegt sein, um es einem Nutzer zu ermöglichen, durch Berührung des Front-Bereichs das Einfahren des Beförderungsschlittens und ggf. direkt die Herstellung eines Getränks zu veranlassen. Die Bereitstellung eines Front-Bereichs ermöglicht somit eine verbesserte Nutzer-Interaktion.

Das Kapselsystem kann einen Drucksensor umfassen, der eingerichtet ist, im ausgefahrenen Zustand eine äußere Kraft auf den Beförderungsschlitten zu detektieren, die in Richtung des eingefahrenen Zustands des Beförderungsschlittens wirkt. Beispielsweise kann detektiert werden, dass ein Nutzer mit einer bestimmten äußeren Kraft auf den Beförderungsschlitten drückt. Die Steuereinheit kann eingerichtet sein, zu veranlassen, dass in Reaktion auf das Detektieren der äußeren Kraft der Beförderungsschlitten in den eingefahrenen Zustand überführt wird. So kann eine intuitive Aktivierung der Beförderungsmittel bereitgestellt werden.

Das Kapselsystem kann einen Schutzbügel umfassen, der ausgebildet ist, um den Beförderungsschlitten im ausgefahrenen Zustand zu umschließen. So können das Kapselsystem und insbesondere der Beförderungsschlitten zuverlässige vor äußeren Einwirkungen geschützt werden.

Alternativ oder ergänzend können die Beförderungsmittel ein oder mehrere Beförderungsbänder, Beförderungsrollen und/oder Beförderungswalzen umfassen, die durch die ein oder mehreren Aktuatoren angetrieben werden. Die Beförderungsmittel können dabei ausgelegt sein, um eine Kapsel zu berühren und um durch eine Bewegung der ein oder mehreren Beförderungsbänder, Beförderungsrollen und/oder Beförderungswalzen die Kapsel an die Verarbeitungsposition zu befördern. So kann eine zuverlässige Beförderung einer Kapsel in den Innenbereich des Kapselsystems gewährleistet werden.

Alternativ oder ergänzend können die Beförderungsmittel einen drehbar gelagerten Zylinder (insbesondere einen Kreiszylinder) umfassen, der mittels der ein oder mehreren Aktuatoren um eine Höhenachse des Zylinders gedreht werden kann, so dass eine Grundfläche des Zylinders stets teilweise im Innenbereich und teilweise außerhalb des Gehäuses angeordnet ist. Der drehbar gelagerte Zylinder wird in diesem Dokument auch als Revolvermagazin bezeichnet. Die Höhenachse des Zylinders kann dabei substantiell senkrecht zwischen dem Boden und der Deckenwand des Gehäuses des Kapselsystems verlaufen. Des Weiteren kann die Höhenachse entlang der Frontwand des Gehäuses des Kapselsystems verlaufen.

Die Aufnahmeeinheit kann durch eine erste Aussparung an der Grundfläche des Zylinders gebildet werden, die derart angeordnet ist, dass die erste Aussparung durch eine Drehung des Zylinders von einem ersten Zustand außerhalb des Gehäuses in einen zweiten Zustand an der Verarbeitungsposition bewegt werden kann. Zu diesem Zweck kann die erste Aussparung mit einem bestimmten Abstand zu der Höhenachse angeordnet sein. Insbesondere kann sich die erste Aussparung näher an einem Rand der Grundfläche des Zylinders als an der Höhenachse des Zylinders befinden. Die Steuereinheit kann eingerichtet sein, die ein oder mehreren Aktuatoren zu veranlassen, den Zylinder um die Höhenachse zu drehen, um die von der Aufnahmeeinheit aufgenommene erste Kapsel an die Verarbeitungsposition zu befördern. Die Verwendung eines drehbar gelagerten Zylinders ermöglicht eine komfortable und präzise Überführung einer Kapsel in den Innenbereich des Kapselsystems.

Das Kapselsystem kann einen umlaufenden Stoßschutz umfassen, der eine Mantelfläche des Zylinders außerhalb des Gehäuses zumindest teilweise umschließt. So kann das Kapselsystem vor äußeren Krafteinwirkungen geschützt werden.

Der Zylinder kann eine zweite Aussparung an der Grundfläche des Zylinders aufweisen, die zur Aufnahme einer weiteren Kapsel ausgebildet ist. Die erste Aussparung kann an einer ersten Position auf der Grundfläche und die zweite Aussparung kann an einer Position auf der Grundfläche angeordnet sein, wobei die erste Position und die zweite Position durch eine Gerade miteinander verbunden werden können, die die Höhenachse des Zylinders schneidet (und typischerweise senkrecht zur Höhenachse verläuft). Dabei können die erste Position und die zweite Position auf unterschiedlichen Seiten von der Höhenachse auf der Geraden angeordnet sein. Insbesondere können die erste und die zweite Aussparung derart an der Grundfläche angeordnet sein, dass sich im ersten Zustand die erste Aussparung außerhalb des Gehäuses und die zweite Aussparung an der Verarbeitungsposition und im zweiten Zustand die zweite Aussparung außerhalb des Gehäuses und die erste Aussparung an der Verarbeitungsposition befinden. Durch die Bereitstellung von mehreren Aussparungen als Aufnahmeeinheiten kann die sequentielle Herstellung von mehreren Getränken beschleunigt werden.

Das Kapselsystem kann einen Sensor umfassen, der eingerichtet ist, zu erkennen, dass die erste Kapsel über die Aufnahmeeinheit an das Kapselsystem übergeben wird. Die Steuereinheit kann eingerichtet sein, in Reaktion darauf, die Beförderungsmittel zu veranlassen, die erste Kapsel an die Verarbeitungsposition zu befördern. Insbesondere kann ohne eine dedizierte Eingabe eines Nutzers bewirkt werden, dass die erste Kapsel nach Übergabe an der Aufnahmeeinheit in den Innenbereich befördert wird. Des Weiteren kann ggf. automatisch (d.h. ohne weitere Eingabe durch einen Nutzer) die Herstellung des ersten Getränks veranlasst werden. So kann die Herstellung eines Getränks in besonders komfortabler Weise veranlasst werden (insbesondere ohne explizite Eingabe durch einen Nutzer des Kapselsystems, ggf. allein in Reaktion auf das Übergeben einer Kapsel an das Kapselsystem an der Aufnahmeeinheit).

Das Kapselsystem kann einen Lesesensor umfassen, der eingerichtet ist, Information in Bezug auf eine von der Aufnahmeeinheit aufgenommene Kapsel zu erfassen. Der Lesesensor kann z.B. einen RFID-Leser, einen NFC-Leser und/oder einen Leser für einen maschinenlesbaren Code (z.B. einen QR-Code) umfassen. Die Kapsel kann einen entsprechenden Datenträger (z.B. einen RFID-Chip, einen NFC-Chip und/oder einen maschinenlesbaren Code) umfassen. Die Steuereinheit kann eingerichtet sein, das erste Getränk in Abhängigkeit von der erfassten Information in Bezug auf die erste Kapsel herzustellen. Insbesondere kann die Steuereinheit auf Basis der erfassten Information die Menge von ein oder mehreren Zutaten (z.B. Wasser) und/oder ein oder mehrere Prozessschritte zur Herstellung des ersten Getränks ermitteln. So wäre das Kapselsystem befähigt, in komfortabler und zuverlässiger Weise unterschiedliche Typen von Getränken herzustellen.

Das Kapselsystem kann eine Benutzerschnittstelle umfassen, mit der ein Nutzer z.B. veranlassen kann, dass die Beförderungsmittel eine Kapsel an die Verarbeitungsposition befördern. Alternativ oder ergänzend kann ein Nutzer über die Benutzerschnittstelle ein oder mehrere Parameter eines herzustellenden Getränks festlegen.

Das Kapselsystem kann weiter (ggf. elektrisch) angetriebene Mittel umfassen, die eine Kapsel nach Entnahme der Inhaltsstoffe aus der Kapsel von der Verarbeitungsposition wegbefördern, um die Verarbeitungsposition für die Aufnahme einer folgenden Kapsel freizugeben. Insbesondere kann eine entleerte Kapsel in einen dafür vorgesehenen Auffangbehälter des Kapselsystems befördert werden.

Es ist zu beachten, dass jegliche Aspekte des in diesem Dokument beschriebenen Systems in vielfältiger Weise miteinander kombiniert werden können. Insbesondere können die Merkmale der Patentansprüche in vielfältiger Weise miteinander kombiniert werden.

Im Weiteren wird die Erfindung anhand von in den Figuren der beigefügten Zeichnung dargestellten Ausführungsbeispielen näher beschrieben. Dabei zeigen:
- Figur 1a: eine beispielhafte Mehrkammer-Kapsel im verschlossenen Zustand;
- Figur 1b: eine beispielhafte Mehrkammer-Kapsel im geöffneten Zustand;
- Figur 1c: das beispielhafte Entleeren einer Mehrkammer-Kapsel;
- Figur 2a: ein Blockdiagramm eines beispielhaften Kapselsystems zur Herstellung eines Getränks;
- Figur 2b: eine perspektivische Ansicht eines Kapselsystems zur Herstellung eines Getränks;
- Figur 3a: eine perspektivische Ansicht von beispielhaften Beförderungsbändern zur Beförderung einer Kapsel an eine Verarbeitungsposition;
- Figur 3b: eine seitliche Ansicht eines beispielhaften Beförderungsbandes zur Beförderung einer Kapsel an eine Verarbeitungsposition;
- Figur 3c: eine beispielhafte Aufnahmeeinheit zur Aufnahme einer Kapsel;
- Figur 4a: eine Seitenansicht eines beispielhaften Beförderungsschlittens für eine Kapsel im ausgefahrenen Zustand;
- Figur 4b: eine Seitenansicht eines beispielhaften Beförderungsschlittens für eine Kapsel im eingefahrenen Zustand;
- Figur 4c: eine perspektivische Ansicht eines beispielhaften Beförderungsschlittens;
- Figur 5a: eine Draufsicht eines beispielhaften Revolvermagazins zur Aufnahme und zur Beförderung einer Kapsel;
- Figur 5b: eine perspektivische Ansicht eines beispielhaften Revolvermagazins;
- Figur 6a: eine Seitenansicht eines beispielhaften Beförderungsschlittens mit Schutzrahmen;
- Figur 6b: eine Draufsicht eines beispielhaften Beförderungsschlittens mit Schutzrahmen; und
- Figur 6c: eine perspektivische Ansicht eines beispielhaften Beförderungsschlittens mit Schutzrahmen.

Wie eingangs dargelegt, befasst sich das vorliegende Dokument mit der zuverlässigen Herstellung eines Getränks auf Basis der Inhaltsstoffe einer Kapsel.

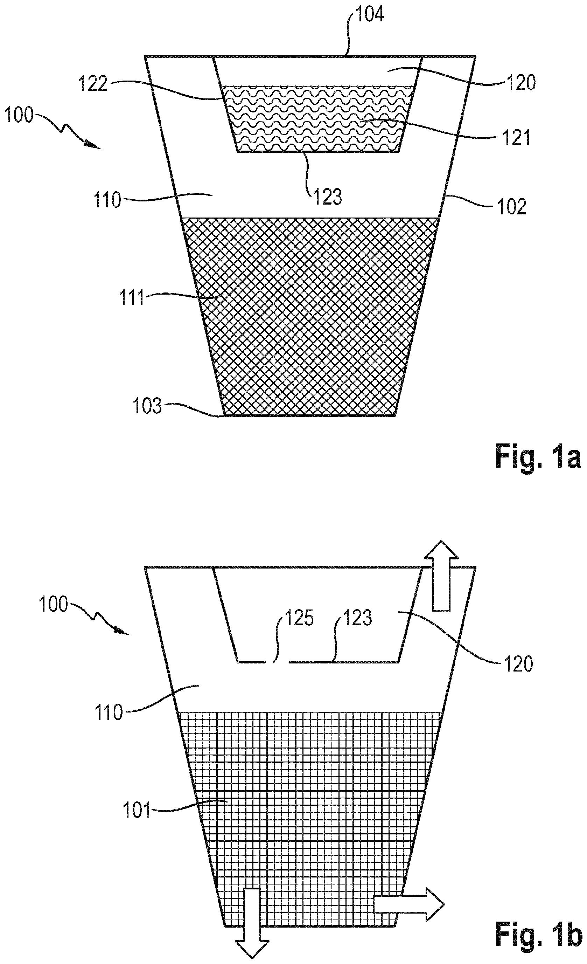

In diesem Zusammenhang zeigt Fig. 1a eine beispielhafte Kapsel, insbesondere eine beispielhafte Mehrkammer-Kapsel 100. Die in Fig. 1a dargestellte Kapsel 100 umfasst zwei Kammern 110, 120, wobei die Kammern 110, 120 durch separate Schalen gebildet werden, die ineinander verschachtelt sind. Eine äußere Schale wird durch eine äußere Seitenwand 102 und einen äußeren Boden 103 gebildet, die einen Gesamthohlraum der Kapsel 100 umschließen. In dem Gesamthohlraum ist eine innere Schale angeordnet, die durch eine innere Seitenwand 122 und einen inneren Boden 123 gebildet wird. In dem dargestellten Beispiel werden die innere Schale und die äußere Schale durch einen gemeinsamen Deckel 104 abgeschlossen.

Die innere Schale bildet die zweite Kammer 120 zur Aufnahme eines zweiten Inhaltsstoffes 121. Ggf. können innerhalb der äußeren Schale, d.h. innerhalb des Gesamthohlraums der Kapsel 100, mehrere innere Schalen angeordnet sein, die mehrere separate Kammern 120 zur Aufnahme von unterschiedlichen Inhaltsstoffen bzw. Substanzen bilden. Der Gesamthohlraum abzüglich der ein oder mehreren inneren Schalen bildet einen verbleibenden Hohlraum, der die erste Kammer 110 zur Aufnahme eines ersten Inhaltsstoffes 111 bildet. Die Inhaltsstoffe 111, 121 (die in diesem Dokument auch als Substanzen bezeichnet werden) können flüssig und/oder fest (z.B. pulverförmig) sein bzw. flüssige und/oder feste (z.B. pulverförmige) Bestandteile umfassen. Jede Kammer 110, 120 der Kapsel 100 kann ein bestimmtes Volumen eines Inhaltsstoffes umfassen. Diese Volumina an unterschiedlichen Inhaltsstoffen werden substantiell vollständig für die Herstellung eines Getränks verwendet. Des Weiteren können die Kammern 110, 120 ggf. Gase (z.B. Luft oder Inertgas) umfassen, die nicht für die Herstellung verwendet werden.

Die Mehrkammer-Kapsel 100 kann derart ausgebildet sein, dass im Rahmen der Herstellung eines Getränks ein Hohlraum innerhalb der Mehrkammer-Kapsel 100 zur Aufnahme einer Inhaltsstoff-Mischung 101 geschaffen werden kann, die den ersten Inhaltsstoff 111 und den zweiten Inhaltsstoff 121 (substantiell vollständig) umfasst. Mit anderen Worten, die Mehrkammer-Kapsel 100 kann derart ausgebildet sein, dass innerhalb der Mehrkammer-Kapsel 100 (z.B. innerhalb der ersten Kammer 110) eine Inhaltsstoff-Mischung 101 hergestellt werden kann, die die gesamten, für das Getränk bestimmten, Inhaltsstoffe 111, 121 der Kapsel 100 umfasst (z.B. in Form einer Lösung und/oder Emulsion). So kann eine zuverlässig wiederholbare Herstellung eines Getränks aus Mehrkammer-Kapseln 100 bewirkt werden.

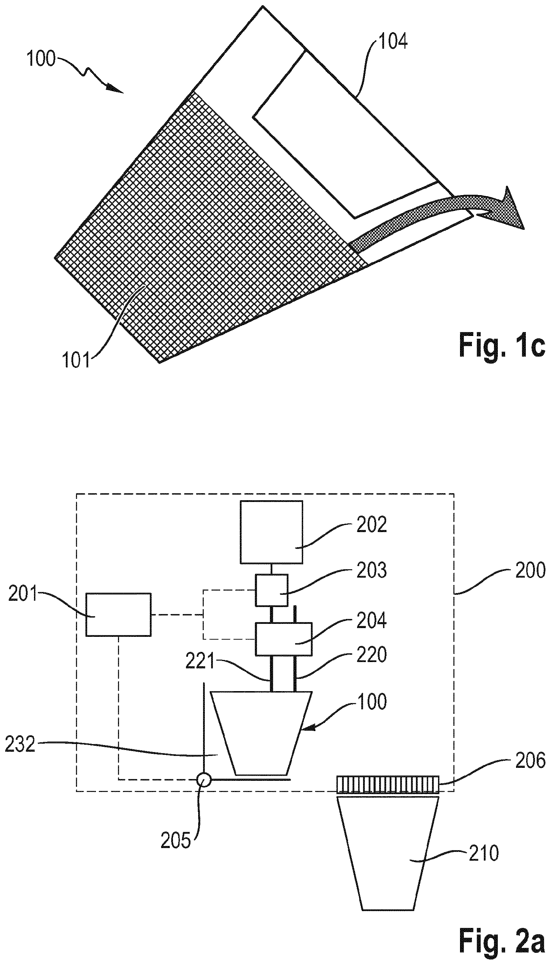

Fig. 1a zeigt eine Mehrkammer-Kapsel 100 in verschlossenem Zustand. Das Kapselsystem kann Mittel umfassen (z.B. ein oder mehrere Nadeln), um ein oder mehrere Kammern 110, 120 einer Kapsel 100 zu öffnen, und um die Inhaltsstoffe 111, 121 der Kammern 110, 120 miteinander zu vermischen. Beispielsweise kann, wie in Fig. 1b dargestellt, eine Öffnung 125 im inneren Boden 123 der inneren Schale bewirkt werden, so dass der zweite Inhaltsstoff 121 (vollständig) aus der zweiten Kammer 120 in die erste Kammer 110 gelangen kann und sich innerhalb der ersten Kammer 110 mit dem ersten Inhaltsstoff 111 vermischen kann, um eine Inhaltsstoff-Mischung 101 zu erzeugen. Die Inhaltsstoff-Mischung 101 kann dann über ein oder mehrere weitere Öffnungen (z.B. im äußeren Deckel 104, im äußeren Boden 103 und/oder in der äußeren Seitenwand 102) aus der Kapsel 100 entnommen werden (wie durch die Pfeile dargestellt). Beispielsweise kann die Kapsel 100 gekippt werden (wie in Fig. 1c dargestellt), um die Inhaltsstoff-Mischung 101 durch eine Öffnung im äußeren Deckel 104 durch Einwirken der Schwerkraft aus der Kapsel 100 zu gießen.

Das Kapselsystem kann somit z.B. eine Nadel zum Anstechen einer Kapsel 100 sowie Mittel zum Vermischen und/oder Auflösen der Substanzen 111, 121 (ggf. mit einer oder mehreren Flüssigkeiten wie z.B. Wasser oder Alkohol bzw. mit Wasserdampf) umfassen. Des Weiteren kann das Kapselsystem Mittel umfassen, um die dabei entstandene Inhaltsstoff-Mischung 101 zu Entleeren und ggf. mit einer weiteren Flüssigkeit zu vermischen oder direkt in ein Glas zu überführen, um ein Getränk bereitzustellen. Die Figuren 1a bis 1c zeigen beispielhafte eine Zweikammer-Kapsel. Es können aber innerhalb des Gesamthohlraums einer Kapsel 100 auch mehr als zwei Kammern 110, 120 oder ggf. nur eine Kammer bereitgestellt werden.

Wie in Fig. 1b dargestellt können die ein oder mehreren (inneren) Schalen bzw. Kammern 120 geöffnet werden, um die Substanzen 111, 121 einer Kapsel 100 miteinander zu vermischen. Dabei können ausschließlich die in den Kammern 110, 120 enthaltenen Substanzen 111, 121 miteinander vermischt werden. Alternativ können ein oder mehrere weitere Medien (z.B. in flüssiger und/oder gasförmiger Form) von außen in die Kapsel 100 zugeführt werden, um die Substanzen 111, 121 der Kammern 110, 120 miteinander zu vermischen. Die in der Kapsel 100 hergestellte Mischung 101 kann somit neben den Inhaltsstoffen 111, 121 noch ein oder mehrere weitere Medien (insbesondere Spül-Medien) umfassen. Die Kapsel 100 ist dabei bevorzugt derart ausgelegt, dass auch diese Medien aufgenommen werden können. Zur Herstellung der Mischung 101 kann mindestens eine Kammer 120 restlos entleert und bei Bedarf mittels eines Spül-Mediums gespült werden. Die so hergestellte Mischung 101 (z.B. eine Lösung und/oder Emulsion) kann dann dem weiteren Getränkezubereitungsprozess (außerhalb der Kapsel 100) über verschiedene Umsetzungsarten zugeführt werden.

Fig. 2a zeigt ein Blockdiagramm eines beispielhaften Kapselsystems 200. Das Kapselsystem 200 umfasst eine Steuereinheit 201, die eingerichtet ist, den Herstellungsprozess eines Getränks zu steuern. Durch einen Nutzer kann eine Kapsel 100 an das System 200 übergeben werden (in eine dafür vorgesehene Kapsel-Aufnahmeeinheit des Systems 200). Die Kapsel kann dann über Beförderungsmittel an eine Verarbeitungsposition 232 im Inneren eines Gehäuses des Kapselsystems 200 überführt werden. Die Beförderungsmittel können durch den Nutzer (z.B. durch Betätigen eines Knopfes oder direkt durch Einführen der Kapsel 100) aktiviert werden. Bei Ankunft der Kapsel 100 an der Verarbeitungsposition 232 kann dann der Herstellungsprozess angestoßen werden.

Die Steuereinheit 201 bewirkt im Rahmen des Herstellungsprozesses, dass die Mittel 221, 220 zum Öffnen der Kapsel 100 (z.B. (hohle) Nadeln) an die Kapsel 100 geführt werden. Dazu kann ein Aktuator 204 angesteuert werden, der z.B. die Nadeln 221, 220 in die Kapsel 100 einführt. Des Weiteren kann ein weiterer Aktuator 203 angesteuert werden, um ein Spül-Medium (z.B. aus einem Behälter 202 des Systems 200) in die Kapsel 100 zu drücken, um zumindest eine Kammer 120 in der Kapsel 100 zu spülen. So kann ggf. in einem ersten Schritt eine Mischung 101 der Inhaltsstoffe 111, 121 aus unterschiedlichen Kammern 110, 120 einer Kapsel 100 erzeugt werden. Die Mischung 101 kann dann aus der Kapsel 100 entnommen werden. Beispielsweise kann das System 200 einen Kipp-Mechanismus 205 aufweisen, der eingerichtet ist, die Kapsel 100 zu kippen, so dass die Mischung 101 (z.B. durch die Öffnung 105 im äußeren Deckel 104) aus der Kapsel 100 gegossen werden kann. Insbesondere kann die Mischung 101 über eine Ausgabeeinheit 206 des Systems 200 in einen Becher 210 gegossen werden, in dem das zu erstellende Getränk dem Nutzer bereitgestellt wird. Das System 200 kann außerdem eingerichtet sein, weitere ein oder mehrere Flüssigkeiten für das zu erstellende Getränk in den Becher 210 zu füllen.

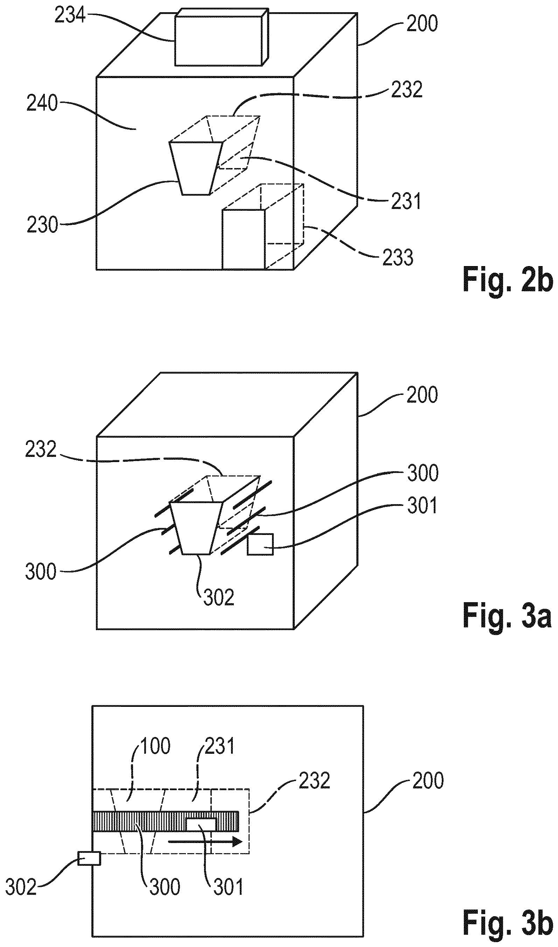

Fig. 2b zeigt eine perspektivische Ansicht von Teilen des Kapselsystems 200. Das Kapselsystem 200 umfasst typischerweise ein Gehäuse mit einer Mehrzahl von Gehäusewänden, die zumindest teilweise einen Innenbereich des Kapselsystems 200 umschließen. An einer Wand 240 (insbesondere an einer Frontwand) des Kapselsystems 200 kann eine Öffnung 230 angeordnet sein, von der eine Kapsel 100 über einen Beförderungsweg 231 zu der Verarbeitungsposition 232 im Innenbereich des Gehäuses befördert werden kann. An der Verarbeitungsposition 232 kann die Kapsel 100 geöffnet und entleert werden, um ein Getränk herzustellen. Das Getränk kann dann in einem Ausgabebereich 233 über eine Ausgabeeinheit 206 ausgegeben werden. Fig. 2b zeigt weiter eine Benutzerschnittstelle 234 (z.B. mit einem berührungsempfindlichen Bildschirm), über die ein Nutzer Einstellung des Kapselsystems 200 vornehmen kann. Die Benutzerschnittstelle 234 kann, wie in Fig. 2b dargestellt, an einer oberen Gehäusewand des Kapselsystems 200 angeordnet sein. Das Kapselsystem 200 kann als Hausgerät, insbesondere als Haushaltsgerät, ausgebildet sein, das z.B. auf die Arbeitsplatte einer Küche gestellt werden kann.

Im Folgenden werden beispielhafte Beförderungsmittel beschrieben, mit denen eine Kapsel 100 automatisch von einer Aufnahmeeinheit (die z.B. an oder vor der Frontwand 240 angeordnet ist) zu der Verarbeitungsposition 232 befördert wird. Die Beförderungsmittel umfassen dazu ein oder mehrere Aktuatoren, durch die eine Bewegung einer Kapsel 100 zur Verarbeitungsposition 232 bewirkt werden kann. Durch die automatische Beförderung einer Kapsel 100 mittels angetriebener Beförderungsmittel an eine definierte Verarbeitungsposition 232 können Fehlplatzierungen und/oder Einklemmsituationen von Kapseln 100 vermieden werden, so dass eine zuverlässige Herstellung von Getränken ermöglicht wird.

In Fig. 3a ist als Beispiel für ein Beförderungsmittel ein Beförderungsband 300 dargestellt, das durch ein oder mehrere Aktuatoren (z.B. Elektromotoren) 301 bewegt wird und das eingerichtet ist, eine Kapsel 100 von einer Aufnahmeeinheit 302 an der Öffnung 230 der Gehäusewand 240 zu der Verarbeitungsposition 232 im Innenbereich des Gehäuses zu befördern. Das Beförderungsband 300 kann z.B. durch elektrisch angetriebene Walzen bewegt werden. Fig. 3b zeigt das Beförderungsband 300 in einer Seitenansicht. Insbesondere ist in Fig. 3b veranschaulicht, wie eine Kapsel 100 durch einen Nutzer an der Aufnahmeeinheit 302 an das Kapselsystem 100 übergeben werden kann und dann von dem Beförderungsband 300 automatisch in den Innenbereich des Systems 200 zu der Verarbeitungsposition 232 befördert wird.

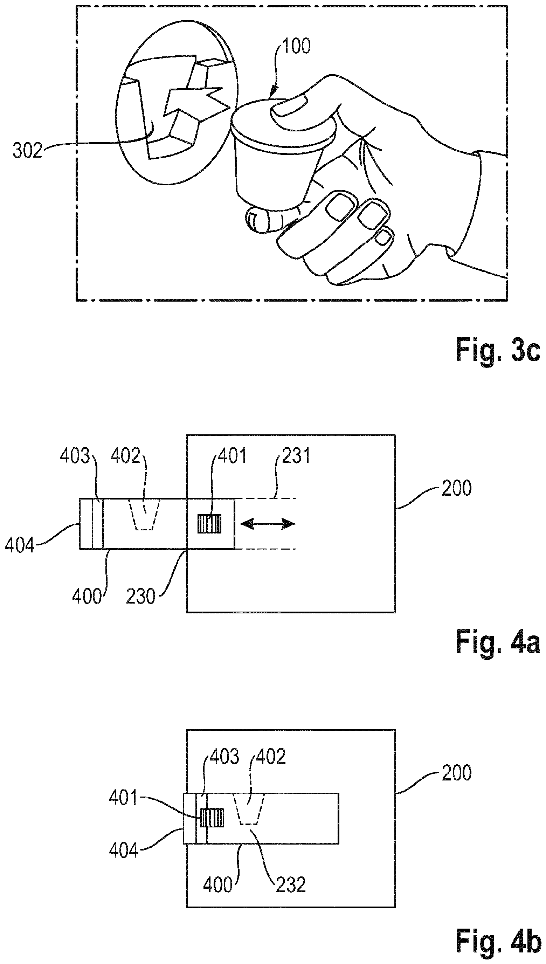

Fig. 3c veranschaulicht, wie ein Nutzer 100 eine Kapsel 100 an der Aufnahmeeinheit 302 an das System 200 übergeben kann. Dabei können an der Aufnahmeeinheit 302 ein oder mehrere Sensoren angeordnet sein, die erkennen, dass eine Kapsel 100 an das System 200 übergeben wird. In Reaktion darauf können dann die Beförderungsmittel 300 (d.h. insbesondere das Beförderungsband) aktiviert werden, um die Kapsel 100 in das Innere des Systems 100 zu befördern. Des Weiteren kann bei Ankunft der Kapsel 100 an der Verarbeitungsposition 232 automatisch der Herstellungsprozess eines Getränks initiiert werden.

An der Front des Getränkesystems 200 kann sich somit ein Eingabeslot 302 (d.h. eine Aufnahmeeinheit) befinden (z.B. vergleichbar mit dem Eingabeslot an einem Geldautomaten). Die Kontur einer Aussparung der Aufnahmeeinheit 302 kann dabei der Kontur einer Kapsel 100 entsprechen, so dass eine definierte Übergabe einer Kapsel 100 an das System 200 ermöglicht wird. Ein, zwei oder mehr Führungsschienen können dazu verwendet werden, eine Kapsel 100 zu arretieren. Eine Kapsel 100 kann in die Aussparung der Aufnahmeeinheit 302 geschoben werden und kann dort von Beförderungsmitteln 300 (z.B. von angetriebenen Rollen oder von einem angetriebenen Bandtransportsystem) aufgenommen werden und weiter ins Innere des Systems 200 gezogen werden. Die Gesamterscheinung des Systems 200 ermöglicht durch die Formgebung der Aufnahmeeinheit 302 eine selbsterklärende und ergonomische Art des Kapsel-Einlegens, wodurch Fehlbedienungen ausgeschlossen oder zumindest reduziert werden können. Des Weiteren ermöglicht eine derartige Aufnahmeeinheit 302 eine Reduzierung von Interaktionsschritten, da durch das Einlegen automatisch die Herstellung eines Getränks initiiert werden kann. Außerdem weist das System 200 eine hohe Robustheit auf, da die Beförderungsmittel 300 vollständig im Inneren des Systems 200 angeordnet sind und somit nicht durch einen Nutzer berührt und ggf. beschädigt werden können.

Fig. 4a stellt einen Beförderungsschlitten 400 als beispielhaftes Beförderungsmittel in einer Seitenansicht dar. Der Beförderungsschlitten 400 umfasst eine Aufnahmeeinheit 402 in Form einer Aussparung, in die von einem Nutzer eine Kapsel 100 eingelegt werden kann (ähnlich wie eine CD in ein ausgefahrenes CD-Laufwerk). Der Beförderungsschlitten 400 kann, z.B. in Reaktion auf eine Eingabe eines Nutzers, durch einen Aktuator 401 (z.B. durch ein elektrisch angetriebenes Zahnrad) in das Innere des Systems 200 gefahren werden, um die Kapsel 100 an die Verarbeitungsposition 232 zu befördern. Fig. 4b zeigt den Beförderungsschlitten 400 in einem eingefahrenen Zustand.

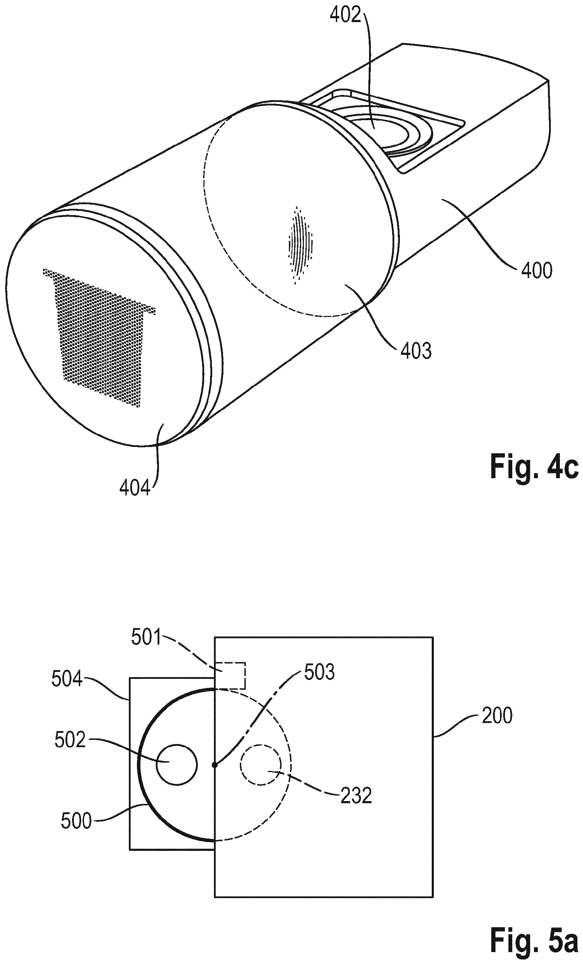

Die Frontseite des Beförderungsschlittens 400 kann einen Leuchtbereich 403 umfassen (wie u.a. in Fig. 4c dargestellt), der ggf. in unterschiedlichen Farben beleuchtet werden kann. Über den Leuchtbereich 403 kann z.B. einem Nutzer ein Zustand des Systems 200 mitgeteilt werden. Alternativ oder ergänzend kann dem Nutzer Information in Bezug auf das hergestellte Getränk angezeigt werden (z.B. durch eine bestimmte Farbkodierung). Die Frontseite des Beförderungsschlittens 400 kann außerdem einen Cover-Bereich 404 aufweisen, der ggf. für die Erfassung einer Eingabe eines Nutzers (z.B. durch eine Berührung) verwendet werden kann.

Ähnlich wie eine CD-Schublade kann der Beförderungsschlitten 400 aus dem System 200 herausgefahren werden, und gibt eine Einlegemöglichkeit (d.h. eine Aufnahmeeinheit 402) für eine Getränkekapsel 100 frei. Ein Nutzer kann eine Kapsel 100 in die Aufnahmeeinheit 402 einlegen, und der Beförderungsschlitten 400 kann dann bestückt mit der Kapsel 100 in das System 200 eingefahren werden und es kann daraufhin der Herstellungsprozess für ein Getränk gestartet werden.

Bei einem geschlossenen Beförderungsschlitten 400 wird das System 200 somit gegenüber Umwelt-/Fremdeinflüssen abgeschlossen bzw. geschützt. Das Öffnen und Schließen des Beförderungsschlittens 400 erfolgt automatisch/motorisch über ein oder mehrere Aktuatoren 401. Auslöser für die Einfahrbewegung können insbesondere folgende Elemente oder Interaktionen sein:
- die Betätigung eines dedizierten Eingabebereichs (z.B. Taste, Knopf, Bildschirmbereich, etc.) am Getränkesystem 200;
- die Frontseite des Beförderungsschlittens 400, die als dedizierter Eingabebereich dient (z.B. über eine Touch-Interaktion oder durch ein leichtes Drücken wie bei einer CD-Schublade (ohne Verwendung eines Sensors an der Frontseite des Beförderungsschlittens 400)); und/oder
- die Betätigung einer Eingabe über eine Benutzerschnittstelle 234 des Systems 200 (z.B. ein darin integrierter (ggf. virtueller) Knopf).

Der Beförderungsschlitten 400 kann insgesamt bestromt ausgeführt werden. Insbesondere kann an dem Beförderungsschlitten 400 eine Energieversorgung bereitgestellt werden (z.B. für ein Lesesystem zur Erkennung eines Kapsel-Typs, für den Leuchtbereich 403 und/oder für Eingabemittel an der Frontseite des Beförderungsschlittens 400).

An der Unterseite des Beförderungsschlittens 400 (insbesondere an der Unterseite der Aufnahmeeinheit 402) kann ein Lesesystem bzw. ein Lesesensor angeordnet sein, das bzw. der eingerichtet ist, eine Kapsel 100 nach dem Einlegen in das System 200 zu erkennen. Das System 200 kann basierend auf der erkannten Kapsel 100 Zubereitungsparameter für das herzustellende Getränk ermitteln. Das Lesesystem kann z.B. auf NFC-Technologie basieren.

Durch ein entsprechend gestaltetes integriertes Lichtsystem im Leuchtbereich 403 kann als visuelle Erkennungsbestätigung zumindest ein Teilbereich des Beförderungsschlittens 400 in der Farbe des zuzubereitenden Getränkes leuchten. Beispielsweise kann eine Zitronenlimonade z.B. mit einer gelben Beleuchtung, und ein Limonensaft mit einer grünen Beleuchtung angezeigt werden. Die Farbkodierung kann dabei flexible eingestellt werden. Alternativ oder ergänzend kann der Status des Herstellungsprozesses mit Lichtsequenzen, z.B. pulsierendem, statischem oder blinkendem Licht, angezeigt werden. Optional kann eine weitere Lichtquelle im System 200 bereitgestellt werden, die z.B. die Getränkebühne (bzw. den Ausgabebereich 233) ausleuchtet. Die Beleuchtung des Ausgabebereichs 233 kann in Abhängigkeit von dem Status des Herstellungsprozesses angepasst werden. So kann die Interaktion mit dem System 200 verbessert werden.

Die Verwendung eines Beförderungsschlittens 400 ermöglicht durch die Formgebung eine selbsterklärende und ergonomische Art des Kapsel-Einlegens, wodurch Fehlbedienungen vermieden oder zumindest reduziert werden können.

Die Aufnahmeeinheit 402 kann einen abgesenkten (zumindest teilweise) umlaufenden Rand um eine eingelegte Kapsel 100 aufweisen. So kann die Entnahme der Kapsel 100 (z.B. bei einem Abbruch des Herstellungsprozesses) ermöglicht werden.

Der Herstellungsprozess kann automatisch durch das Einfahren des Beförderungsschlittens 400 ausgelöst werden. So kann die Anzahl von Interaktionsschritten minimiert werden.

Die Frontgestaltung des Beförderungsschlittens 400 kann durch Bereitstellung eines austauschbaren Cover-Bereichs 404 flexibel sein. Beispielsweise können unterschiedliche Cover oder Abdeckungen aufgesetzt werden. Diese Cover können aus verschiedenen Materialien bestehen und/oder unterschiedliche Oberflächen-Beschaffenheit aufweisen.

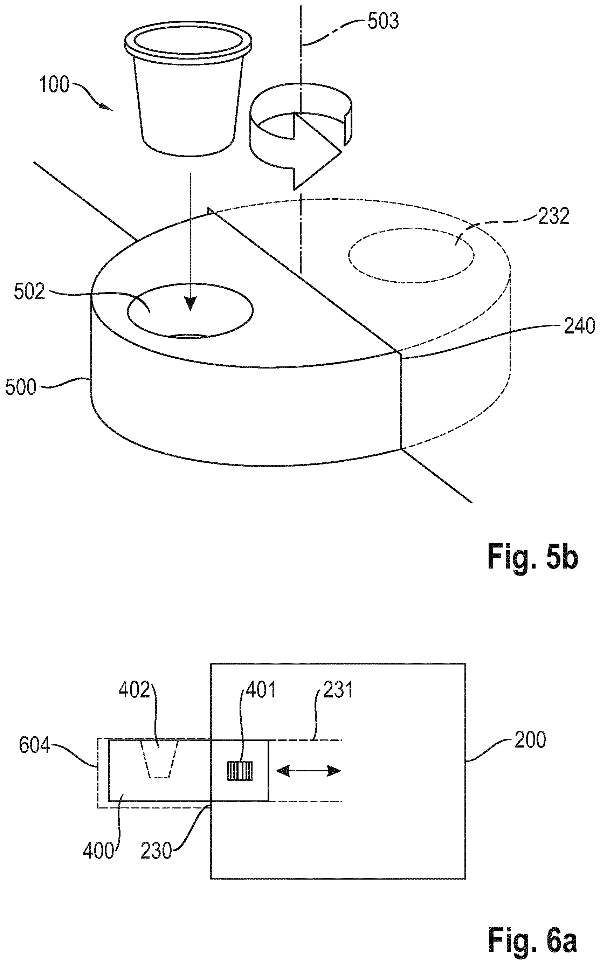

Fig. 5a zeigt ein Revolvermagazin 500 (bzw. einen Zylinder) als beispielhaftes Beförderungsmittel in einer Draufsicht. Das Revolvermagazin 500 umfasst zumindest eine Aufnahmeeinheit 502, die in einer bestimmten Stellung des Revolvermagazins 500 außerhalb des Systems 200 angeordnet ist, so dass ein Nutzer eine Kapsel 100 in die Aufnahmeeinheit 502 einlegen kann. Das Revolvermagazin 500 kann dann um eine Rotationsachse 503 (auch als Höhenachse bezeichnet) gedreht werden (z.B. in Reaktion auf eine Eingabe eines Nutzers), um die Aufnahmeeinheit 502 mit der Kapsel 100 in das Innere des Systems 200 und insbesondere zu der Verarbeitungsposition 232 zu befördern. Zu diesem Zweck kann das Revolvermagazin 500 durch einen Aktuator 501 (insbesondere durch einen Elektromotor) angetrieben werden. Das Revolvermagazin 502 kann durch einen umlaufenden Stoßschutz 504 geschützt sein, um z.B. ein Einklemmen des Revolvermagazins 502 zu verhindern. Fig. 5b zeigt eine perspektivische Ansicht eines Revolvermagazins 500 (ohne Stoßschutz 504).

In ein derartiges Revolvermagazin 500 kann eine Kapsel 100 intuitiv und aufrecht eingelegt werden, d.h. die Kapsel 100 kann mit der Deckelseite (auf der ein Aufdruck zur Erkennung des herzustellenden Getränks dargestellt sein kann) nach oben eingelegt werden, wodurch ein erhöhter Komfort für einen Nutzer ermöglicht wird.

Das Revolvermagazin 500 stellt eine Art Karussell dar, welches eine eingelegte Kapsel 100 automatisch ins Innere des Systems 200 rotiert. An der Unterseite der rotierenden Aufnahmeeinheit 502 (bzw. des Futterals) kann sich ein Lesesystem befinden, das eine Kapsel 100 nach dem Einlegen erkennt kann, um entsprechende Zubereitungsparameter zu bestimmen. Im Inneren des Systems 200 wird der Prozess der Getränkezubereitung durchgeführt.

Das Revolvermagazin 500 kann zur Herstellung eines weiteren Getränks in die Einlegestellung zurückrotieren (z.B. wenn nur eine Aufnahmeeinheit 502 bereitgestellt wird). Alternativ kann durch die Drehbewegung, mit der eine Kapsel in das Innere des Systems 200 rotiert wird, eine weitere Aufnahmeeinheit 502 herausgefahren werden, in die (ohne weitere Schritte) eine nächste Kapsel aufgenommen werden kann. So kann eine komfortable und zügige Herstellung von mehreren Getränken mittels mehrerer Kapseln 100 ermöglicht werden.

Das Revolvermagazin 500 kann somit eine oder mehrere Einlegeöffnungen bzw. Aufnahmeeinheiten 502 umfassen und die Drehung des Revolvermagazins 500 kann ggf. in beide Drehrichtungen erfolgen. Durch Bereitstellung eines umlaufenden Stoßschutzes 504, der mit dem Revolvermagazin 500 eine Fläche bildet, können Beschädigungen des Revolvermagazins 500 vermieden werden. Des Weiteren können durch Bereitstellen von mehreren Aufnahmeeinheiten 502 ggf. mehrere Kapseln 100 auf einmal von dem System 200 aufgenommen werden (und dann sequentiell verarbeitet werden). Durch die Formgebung ergibt sich eine selbsterklärende und ergonomische Art des Kapsel-Einlegens, durch die Fehlbedienungen vermieden oder zumindest reduziert werden können. Mit dem Rotieren des Revolvermagazins 500 kann direkt der Herstellungsprozess eines Getränks angestoßen werden, so dass die Anzahl von Interaktionsschritten reduziert werden kann.

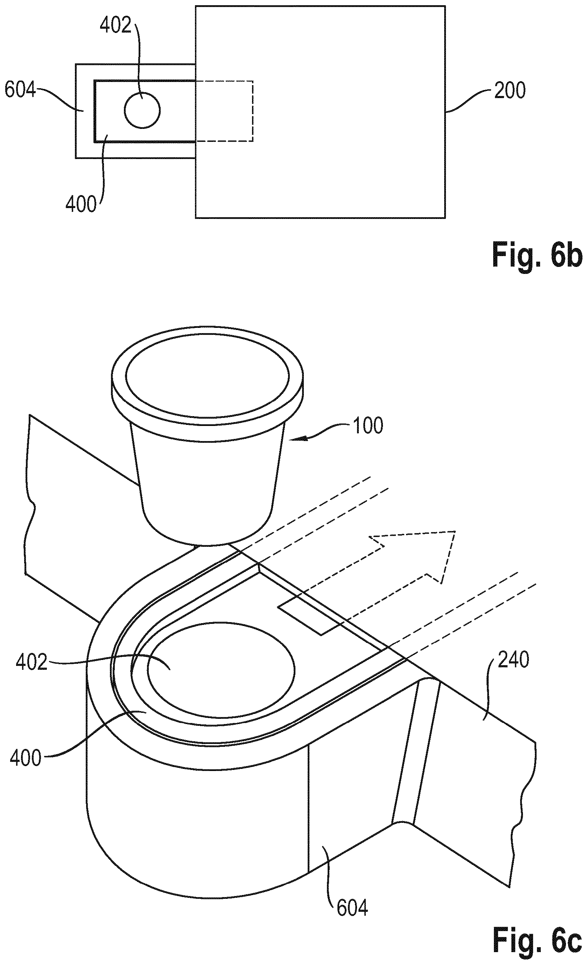

Fig. 6a (Seitenansicht), Fig. 6b (Draufsicht) und Fig. 6c (perspektivische Ansicht) zeigen einen Beförderungsschlitten 400 mit einem umlaufenden Schutzbügel 604, durch den eine Beschädigung des Beförderungsschlittens 400 vermieden werden kann. Insbesondere ist in den Figuren 6a, 6b und 6c der Beförderungsschlitten 400 innerhalb eines feststehenden Bügels 604 angeordnet. In die Aufnahmeeinheit 402 des Schlittens 400 kann eine Kapsel 100 aufrecht (d.h. mit der Deckelseite von oben) eingelegt werden. Der Schlitten 400 zieht die Kapsel 100 automatisch ins Innere des Systems 200. Sobald der Prozess der Getränkeerstellung abgeschlossen ist, kann die Kapsel 100 in einen Auffangbehälter im Inneren des Systems 200 ausgeworfen werden, und somit die Aufnahmeeinheit 402 wieder freigeben. Der Schlitten 400 kann dann (ggf. automatisch) wieder zurück in die ausgefahrene Einlegestellung gefahren werden, und ist somit bereit, die nächste Kapsel 100 aufzunehmen. Die Bereitstellung eines Schutzbügels 604 ermöglicht es dabei, dass der Schlitten 400 standardmäßig ausgefahren ist (auch im deaktivierten Zustand). So kann der Komfort für einen Nutzer erhöht werden.

Der Antrieb des Schlittens 400 kann z.B. über ein Schneckengetriebe, ein Zahnradgetriebe, eine Riemenübersetzung, etc. erfolgen.

Der feststehende Bügel 604 bildet eine Art Stoßstange, die das System 200 (insbesondere den Schlitten 400) gegen Stöße und andere Krafteinwirkungen schützt.

Die vorliegende Erfindung ist nicht auf die gezeigten Ausführungsbeispiele beschränkt. Insbesondere ist zu beachten, dass die Beschreibung und die Figuren nur das Prinzip des vorgeschlagenen Systems veranschaulichen sollen.

## Patentansprüche

1. Kapselsystem (200) zur Herstellung eines Getränks, wobei das Kapselsystem (200) umfasst:
- ein Gehäuse, das zumindest teilweise einen Innenbereich des Kapselsystems (200) umschließt;
- eine Aufnahmeeinheit (302, 402, 502), die eingerichtet ist, eine Kapsel (100) zur Herstellung eines Getränks aufzunehmen;
- Beförderungsmittel (300, 400, 500), die eingerichtet sind, eine von der Aufnahmeeinheit (302, 402, 502) aufgenommene Kapsel (100) mittels ein oder mehrerer Aktuatoren (301, 401, 501) an eine Verarbeitungsposition (232) im Innenbereich des Kapselsystems (200) zu befördern; wobei die Beförderungsmittel (300, 400, 500) einen Beförderungsschlitten (400) umfassen, der durch die ein oder mehreren Aktuatoren (401) von einem ausgefahrenen Zustand in einen eingefahrenen Zustand überführt werden kann; wobei die Aufnahmeeinheit (402) an dem Beförderungsschlitten (400) angeordnet ist, so dass sich die Aufnahmeeinheit (402) im ausgefahrenen Zustand außerhalb des Gehäuses des Kapselsystems (200) befindet, um eine Kapsel (100) aufzunehmen, und sich im eingefahrenen Zustand an der Verarbeitungsposition (232) befindet;
- Verarbeitungsmittel (204), die eingerichtet sind, eine an der Verarbeitungsposition (232) angeordnete Kapsel (100) zu öffnen, um aus Inhaltsstoffen der Kapsel (100) ein Getränk herzustellen;
- eine Ausgabeeinheit (206) zur Bereitstellung eines aus einer Kapsel (100) hergestellten Getränks;
- einen Sensor, der eingerichtet ist, zu erkennen, dass eine erste Kapsel (100) über die Aufnahmeeinheit (302, 402, 502) durch einen Nutzer an das Kapselsystem (200) übergeben wird; und
- eine Steuereinheit (201), die eingerichtet ist,
- in Reaktion darauf, dass durch den Sensor erkannt wird, dass die erste Kapsel (100) an das Kapselsystem (200) übergeben wurde, den Beförderungsschlitten (400) automatisch zu veranlassen, von dem ausgefahrenen Zustand in den eingefahrenen Zustand zu fahren, um die erste Kapsel (100) an die Verarbeitungsposition (232) zu befördern; und
- im Anschluss daran die Verarbeitungsmittel (204) zu veranlassen, aus Inhaltsstoffen der ersten Kapsel (100) ein erstes Getränk herzustellen und über die Ausgabeeinheit (206) bereitzustellen.

2. Kapselsystem (200) gemäß Anspruch 1, wobei
- der Beförderungsschlitten (400) einen Leuchtbereich (403) aufweist, der eine Mehrzahl von Leuchtzuständen aufweist;
- die Steuereinheit (201) eingerichtet ist, den Leuchtbereich (403) anzusteuern, um mittels der Mehrzahl von Leuchtzuständen, Information in Bezug auf die Herstellung des ersten Getränks auszugeben; und
- die Information in Bezug auf die Herstellung des ersten Getränks insbesondere umfasst: einen Prozessstatus bei der Herstellung des ersten Getränks; und/oder einen Typ des hergestellten ersten Getränks.

3. Kapselsystem (200) gemäß einem der vorhergehenden Ansprüche, wobei der Beförderungsschlitten (400) einen austauschbaren Front-Bereich (404) aufweist.

4. Kapselsystem (200) gemäß einem der vorhergehenden Ansprüche, wobei das Kapselsystem (200) einen Schutzbügel (604) umfasst, der ausgebildet ist, um den Beförderungsschlitten (400) im ausgefahrenen Zustand zu umschließen.

5. Kapselsystem (200) gemäß einem der vorhergehenden Ansprüche, wobei
- das Kapselsystem (200) einen Drucksensor umfasst, der eingerichtet ist, im ausgefahrenen Zustand eine äußere Kraft auf den Beförderungsschlitten (400) zu detektieren, die in Richtung des eingefahrenen Zustands des Beförderungsschlittens (400) wirkt; und
- die Steuereinheit (201) eingerichtet ist, zu veranlassen, dass in Reaktion auf das Detektieren der äußeren Kraft der Beförderungsschlitten (400) in den eingefahrenen Zustand überführt wird.

6. Kapselsystem (200) gemäß einem der vorhergehenden Ansprüche, wobei
- das Kapselsystem (200) einen Lesesensor umfasst, der eingerichtet ist, Information in Bezug auf eine von der Aufnahmeeinheit (302, 402, 502) aufgenommenen Kapsel (100) zu erfassen; und
- die Steuereinheit (201) eingerichtet ist, das erste Getränk in Abhängigkeit von der erfassten Information in Bezug auf die erste Kapsel (100) herzustellen.

7. Kapselsystem (200) gemäß einem der vorhergehenden Ansprüche, wobei das Kapselsystem (200) eingerichtet ist, ein Getränk auf Basis einer Kapsel (100) herzustellen, die mehrere Kammern (110, 120) mit unterschiedlichen Substanzen (111, 121) zur Herstellung eines Getränks umfasst.

8. Kapselsystem (200) gemäß Anspruch 7, wobei
- die Kapsel (100) eine äußere Schale (200) umfasst, die einen äußeren Boden (103), eine äußere Seitenwand (102) und einen äußeren Deckel (104) aufweist, die einen Gesamthohlraum der Kapsel (100) bilden;
- die Kapsel (100) mindestens eine innere Schale (220) umfasst, die innerhalb des Gesamthohlraums der Kapsel (100) angeordnet ist und die eine zweite Kammer (120) zur Aufnahme eines zweiten Volumens eines zweiten Inhaltsstoffes (121) bildet; wobei durch den Gesamthohlraum abzüglich der mindestens einen inneren Schale (220) ein verbleibender Hohlraum der Kapsel (100) als erste Kammer (110) zur Aufnahme eines ersten Volumens eines ersten Inhaltsstoffes (111) gebildet wird; und
- die Verarbeitungsmittel (204) eingerichtet sind, um die innere Schale (220) der Kapsel (100) zu öffnen und um innerhalb der Kapsel (100) einen Hohlraum zur Aufnahme einer Mischung (101) zu schaffen, die den ersten Inhaltsstoff (111) und den zweiten Inhaltsstoff (121) vollständig umfasst.

9. Kapselsystem (200) gemäß Anspruch 8, wobei die Verarbeitungsmittel (204) eingerichtet sind, die Kapsel (100) zu kippen, um die Mischung (101) durch eine Öffnung im äußeren Deckel (104) durch Einwirken der Schwerkraft aus der Kapsel (100) zu gießen.

10. Kapselsystem (200) gemäß einem der vorhergehenden Ansprüche, wobei die Aufnahmeeinheit (302, 402, 502) an einer Frontwand (240) des Gehäuses angeordnet ist.

11. Kapselsystem (200) gemäß Anspruch 10, wobei die Aufnahmeeinheit (302, 402, 502) derart ausgebildet ist, dass eine Kapsel (100) mit einem nach Oben orientierten Deckel (104) in die Aufnahmeeinheit (302, 402, 502) eingebracht werden kann.

12. Kapselsystem (200) gemäß einem der vorhergehenden Ansprüche, wobei das Kapselsystem (200) eine Benutzerschnittstelle (234) umfasst, mit der ein Nutzer veranlassen kann, dass die Beförderungsmittel (300, 400, 500) eine Kapsel (100) an die Verarbeitungsposition (232) befördern.

## Claims

1. Capsule system (200) for producing a beverage, wherein the capsule system (200) comprises:
- a housing which at least partially surrounds an inner region of the capsule system (200);
- a receiving unit (302, 402, 502) which is configured to receive a capsule (100) for producing a beverage;
- conveying means (300, 400, 500) which are configured to convey a capsule (100) received by the receiving unit (302, 402, 502) by means of one or more actuators (301, 401, 501) to a processing position (232) in the inner region of the capsule system (200); wherein the conveying means (300, 400, 500) comprise a conveying carriage (400) which can be conducted by means of the one or more actuators (401) from an extended state into a retracted state; wherein the receiving unit (402) is arranged on the conveying carriage (400) such that in the extended state the receiving unit (402) is located outside the housing of the capsule system (200) in order to receive a capsule (100) and in the retracted state is located at the processing position (232);
- processing means (204) which are configured to open a capsule (100) arranged at the processing position (232) in order to produce a beverage from ingredients contained in the capsule (100);
- a dispensing unit (206) for providing a beverage produced from a capsule (100);
- a sensor which is configured to detect that a first capsule (100) is transferred to the capsule system (200) by a user by way of the receiving unit (302, 402, 502); and
- a control unit (201) which is configured
- in response to it being detected by the sensor that the first capsule (100) has been transferred to the capsule system (200), to automatically cause the conveying carriage (400) to move from the extended state into the retracted state in order to convey the first capsule (100) to the processing position (232); and
- directly thereafter to cause the processing means (204) to produce a first beverage from ingredients contained in the first capsule (100) and to provide said first beverage via the dispensing unit (206).

2. Capsule system (200) according to claim 1, wherein
- the conveying carriage (400) has an illumination region (403) that has a plurality of illumination states;
- the control unit (201) is configured to activate the illumination region (403) in order to output information relating to the production of the first beverage by means of the plurality of illumination states; and
- the information relating to the production of the first beverage comprises in particular: a process status during the production of the first beverage; and/or a type of the first beverage produced.

3. Capsule system (200) according to one of the preceding claims, wherein the conveying carriage (400) has an interchangeable front section (404).

4. Capsule system (200) according to one of the preceding claims, wherein the capsule system (200) comprises a protective bracket (604) which is embodied to enclose the conveying carriage (400) in the extended state.

5. Capsule system (200) according to one of the preceding claims, wherein
- the capsule system (200) comprises a pressure sensor which is configured to detect an external force acting on the conveying carriage (400) in the extended state, which external force acts in the direction of the retracted state of the conveying carriage (400); and
- the control unit (201) is configured to cause the conveying carriage (400) to be conducted into the retracted state in response to the detection of the external force.

6. Capsule system (200) according to one of the preceding claims, wherein
- the capsule system (200) comprises a read sensor which is configured to capture information relating to a capsule (100) received by the receiving unit (302, 402, 502); and
- the control unit (201) is configured to produce the first beverage as a function of the captured information relating to the first capsule (100).

7. Capsule system (200) according to one of the preceding claims, wherein the capsule system (200) is configured to produce a beverage on the basis of a capsule (100) which comprises a plurality of chambers (110, 120) containing different substances (111, 121) for producing a beverage.

8. Capsule system (200) according to claim 7, wherein
- the capsule (100) comprises an outer shell (200) which has an outer base (103), an outer side wall (102) and an outer lid (104) which form an overall cavity of the capsule (100);
- the capsule (100) comprises at least one inner shell (220) which is arranged inside the overall cavity of the capsule (100) and which forms a second chamber (120) for receiving a second volume of a second ingredient (121); wherein a remaining cavity of the capsule (100) is formed by the overall cavity minus the at least one inner shell (220) as a first chamber (110) for receiving a first volume of a first ingredient (111); and
- the processing means (204) are configured to open the inner shell (220) of the capsule (100) and to create a cavity within the capsule (100) for receiving a mixture (101) which fully comprises the first ingredient (111) and the second ingredient (121).

9. Capsule system (200) according to claim 8, wherein the processing means (204) are configured to tilt the capsule (100) in order to pour the mixture (101) out of the capsule (100) through an opening in the outer lid (104) due to the effect of the force of gravity.

10. Capsule system (200) according to one of the preceding claims, wherein the receiving unit (302, 402, 502) is arranged on a front wall (240) of the housing.

11. Capsule system (200) according to claim 10, wherein the receiving unit (302, 402, 502) is embodied in such a way that a capsule (100) having an upward-oriented lid (104) can be introduced into the receiving unit (302, 402, 502).

12. Capsule system (200) according to one of the preceding claims, wherein the capsule system (200) comprises a user interface (234) by means of which a user can cause the conveying means (300, 400, 500) to convey a capsule (100) to the processing position (232).

## Revendications

1. Système à capsule (200) pour la préparation d'une boisson, dans lequel le système à capsule (200) comprend :
- un carter, qui entoure au moins partiellement une zone intérieure du système à capsule (200) ;
- une unité d'accueil (302, 402, 502), aménagée afin d'accueillir une capsule (100) pour la préparation d'une boisson ;
- des moyens de transport (300, 400, 500), aménagés afin de transporter une capsule (100) accueillie par l'unité d'accueil (302, 402, 502) au moyen d'un ou de plusieurs actionneur(s) (301, 401, 501) en une position de traitement (232) dans la zone intérieure du système à capsule (200) ; dans lequel les moyens de transport (300, 400, 500) comprennent un traîneau de transport (400), qui peut être transféré par l'actionneur ou les actionneurs (401) d'un état sorti vers un état rentré ; dans lequel l'unité d'accueil (402) est disposée sur le traîneau de transport (400) de sorte que l'unité d'accueil (402) se trouve, à l'état sorti, en dehors du carter du système à capsule (200), afin d'accueillir une capsule (100), et se trouve, à l'état rentré, dans la position de traitement (232) ;
- des moyens de traitement (204), aménagés afin d'ouvrir une capsule (100) disposée dans la position de traitement (232), afin de préparer une boisson au départ des composants de la capsule (100) ;
- une unité d'émission (206) pour la mise à disposition d'une boisson fabriquée au départ d'une capsule (100) ;
- un capteur, aménagé afin de détecter qu'une première capsule (100) est transmise via l'unité d'accueil (302, 402, 502) par un utilisateur au système à capsule (200) ; et
- une unité de commande (201), aménagée,
- d'ordonner automatiquement, en réaction au fait que le capteur détecte que la première capsule (100) a été transmise au système à capsule (200), au traîneau de transport (400) de se déplacer de l'état sorti vers l'état rentré, afin de transporter la première capsule (100) en la position de traitement (232) ; et
- d'ordonner ensuite aux moyens de traitement (204) de préparer une première boisson au départ des composants de la première capsule (100) et de la mettre à disposition via l'unité d'émission (206).

2. Système à capsule (200) selon la revendication 1, dans lequel
- le traîneau de transport (400) présente une zone lumineuse (403), qui présente une pluralité d'états lumineux ;
- l'unité de commande (201) est aménagée afin de commander la zone lumineuse (403), afin d'émettre, au moyen de la pluralité d'états lumineux, une information en lien avec la préparation de la première boisson ; et
- l'information en lien avec la préparation de la première boisson comprend en particulier : un état de processus lors de la préparation de la première boisson ; et/ou un type de la première boisson préparée.

3. Système à capsule (200) selon l'une des revendications précédentes, dans lequel le traîneau de transport (400) présente une zone frontale (404) échangeable.

4. Système à capsule (200) selon l'une des revendications précédentes, dans lequel le système à capsule (200) comprend un étrier de protection (604) formé afin d'entourer le traîneau de transport (400) à l'état sorti.

5. Système à capsule (200) selon l'une des revendications précédentes, dans lequel
- le système à capsule (200) comprend un capteur de pression afin de détecter, à l'état sorti, sur le traîneau de transport (400), une force extérieure agissant en direction de l'état rentré du traîneau de transport (400) ; et
- l'unité de commande (201) est aménagée afin d'ordonner qu'en réaction à la détection de la force extérieure, le traîneau de transport (400) soit transféré dans l'état rentré.

6. Système à capsule (200) selon l'une des revendications précédentes, dans lequel
- le système à capsule (200) comprend un capteur de lecture aménagé afin de saisir une information en lien avec une capsule (100) accueillie par l'unité d'accueil (302, 402, 502) ; et
- l'unité de commande (201) est aménagée afin de préparer la première boisson en fonction de l'information saisie en lien avec la première capsule (100).

7. Système à capsule (200) selon l'une des revendications précédentes, dans lequel le système à capsule (200) est aménagé afin de préparer une boisson sur la base d'une capsule (100) comprenant plusieurs chambres (110, 120) avec différentes substances (111, 121) pour la préparation d'une boisson.

8. Système à capsule (200) selon la revendication 7, dans lequel
- la capsule (100) comprend une coque extérieure (200), qui présente un fond extérieur (103), une paroi latérale extérieure (102) et un couvercle extérieur (104), qui constituent une cavité globale de la capsule (100) ;
- la capsule (100) comprend au moins une coque intérieure (220), disposée à l'intérieur de la cavité globale de la capsule (100) et qui constitue une deuxième chambre (120) pour l'accueil d'un deuxième volume d'un deuxième composant (121) ; dans lequel la cavité globale moins l'au moins une coque intérieure (220) constitue une cavité résiduelle de la capsule (100) sous la forme d'une première chambre (110) pour l'accueil d'un premier volume d'un premier composant (111) ; et
- les moyens de traitement (204) sont aménagés afin d'ouvrir la coque intérieure (220) de la capsule (100) et afin de créer à l'intérieur de la capsule (100) une cavité pour l'accueil d'un mélange (101) comprenant intégralement le premier composant (111) et le deuxième composant (121).

9. Système à capsule (200) selon la revendication 8, dans lequel les moyens de traitement (204) sont aménagés afin de faire basculer la capsule (100), afin de verser le mélange (101) à travers un orifice dans le couvercle extérieur (104) par l'effet de la force de pesanteur au départ de la capsule (100).

10. Système à capsule (200) selon l'une des revendications précédentes, dans lequel l'unité d'accueil (302, 402, 502) est disposée sur une paroi avant (240) du carter.

11. Système à capsule (200) selon la revendication 10, dans lequel l'unité d'accueil (302, 402, 502) est formée de telle sorte qu'une capsule (100) avec un couvercle (104) orienté vers le dessus peut être insérée dans l'unité d'accueil (302, 402, 502).

12. Système à capsule (200) selon l'une des revendications précédentes, dans lequel le système à capsule (200) comprend une interface utilisateur (234), avec laquelle un utilisateur peut ordonner que les moyens de transport (300, 400, 500) transportent une capsule (100) en la position de traitement (232).
